## Europäisches Patentamt

## European Patent Office

## Office européen des brevets

(19)

(11) Veröffentlichungsnummer: **0 045 322**
**A1**

(12) # EUROPÄISCHE PATENTANMELDUNG

(21) Anmeldenummer: **80104562.6**

(22) Anmeldetag: **01.08.80**

(51) Int. Cl.³: **F 02 B 41/02**
**F 02 B 53/08, F 01 C 1/344**

(43) Veröffentlichungstag der Anmeldung:
**10.02.82 Patentblatt 82/6**

(84) Benannte Vertragsstaaten:
**DE FR GB IT**

(71) Anmelder: **Ingelheim, Peter, Graf von**
**Ebersberger Strasse 34**
**D-8000 München 80(DE)**

(72) Erfinder: **Ingelheim, Peter, Graf von**
**Ebersberger Strasse 34**
**D-8000 München 80(DE)**

(54) **Rotationsmaschine mit Schiebern.**

(57) Die Maschine besteht aus einem Gehäuse (G,7) in dessen Innenraum (I,8) ein Kraftübertrager (KÜ,1) beweglich gelagert ist und dersolche Bewegungen ausführt, daß Punkte (PK) des Kraftübertragers in einer Ebene liegende geschlossene Kurvenzüge (KZ) mit nichtleerem Innengebiet (IG) durchlaufen. In dem mit dem Arbeitsmedium gefüllten Raum (TI) zwischen Kraftübertrager und Gehäuseinnenwand sind bewegbare Dichtungsvorrichtungen (DG,5) so angebracht, daß zwischen zwei Vorrichtungen, Gehäuseinnenwand und Oberfläche des Kraftübertragers abgeschlossene Kammern (KA,16) gebildet werden können. Durch die Form des Kraftübertragers und des Gehäuseinnenraums und durch die, durch die Stellung des Kraftübertragers gesteuerte Stellung der Vorrichtungen kann das Volumen der Kammer durch Bewegung des Kraftübertragers so geändert werden, daß Gase oder Dämpfe in dieser Kammer verdichtet oder entspannt werden. Die innere Energie und damit der Druck des Arbeitsmediums in einer Kammer kann durch Zuführung von Wärmeenergie erhöht werden. Damit wird ein Druck auf den Kraftübertrager in oder entgegen der Drehrichtung erzeugt, der zur Gewinnung mechanischer Arbeit genutzt wird.

Bei Verbrennungsmotoren des Otto- oder Dieselprinzips kann beim Expansionsprozeß durch weiteres Vergrößern der Arbeitskammer über das maximale Volumen des Ansaugprozesses hinaus eine Entspannung des Arbeitsmediums bis auf Außendruck erreicht werden und damit der Thermische Wirkungsgrad verbessert werden. Dies wird mit der Maschine bewirkt.

Des weiteren wird die Maschine für Verfahren angewandt, die in einer Heizkammer dem Arbeitsmedium durch heiße Verbrennungsgase oder Dämpfe oder über Wärmetauscher Wärmeenergie zuführen und diese in einer Maschine teilweise in mechanische Arbeit umwandeln. Auch dafür können Maschinen des beschriebenen Prinzips verwandt werden. Der Kreisprozeß dieses Verfahrens ist:
1. adiabatische Verdichtung
2. isochore Erwärmung
3. adiabatische Entspannung
4. isobare Wärmeabfuhr

./...

Figur 3

Maschinenprinzip und nach diesem Prinzip gebaute Maschinen, die Gase, Dämpfe oder verdampfte Flüssigkeiten als Arbeitsmedium nutzen, um thermische Energie in mechanische Arbeit umzuwandeln, und thermodynamische Verfahren bei denen dieses Maschinenprinzip angewandt werden kann.

Die Erfindung bezieht sich auf ein Maschinenprinzip und nach diesem Prinzip gebaute Maschinen, die Gase,Dämpfe oder verdampfte Flüssigkeiten als Arbeitsmedium nutzen, um thermische Energie in mechanische Arbeit umzuwandeln, und thermodynamische Verfahren, bei denen dieses Maschinenprinzip angewandt werden kann. Die Maschine besteht aus einem Gehäuse in dessen Innenraum ein Kraftübertrager beweglich gelagert ist und als Drehkolben genutzt wird. In dem mit dem Arbeitsmedium gefüllten Raum zwischen Kraftübertrager und Oberfläche des Kraftübertragers sind bewegbare Dichtungsvorrichtungen so angebracht, daß zwischen zwei Vorrichtungen, Gehäuseinnenwand und Oberfläche des Kraftübertragers abgeschlossene Kammern gebildet werden können. Durch die Form des Kraftübertragers und des Gehäuseinnenraums und durch die, durch die Stellung des Kraftübertragers gesteuerte Stellung der Vorrichtungen kann das Volumen der Kammer durch Bewegung des Kraftübertragers so geändert werden, daß Gase oder Dämpfe in dieser Kammer verdichtet oder entspannt werden. Die innere Energie und damit der Druck des Arbeitsmediums in einer Kammer kann durch Zuführung von Wärmeenergie erhöht werden. Damit wird ein Druck auf den Kraftübertrager in oder entgegen der Drehrichtung erzeugt, der zur Gewinnung mechanischer Arbeit genutzt wird.

Dieses Maschinenprinzip kann genutzt werden um den Wirkungsgrad bekannter thermodynamischer Prozesse zu verbessern oder neuartige thermodynamische Prozesse zu ermöglichen.

Maschinen und Verfahren, die Wärmeenergie in mechanische Arbeit umwandeln, finden vielfache Anwendung. Allgemein bekannt sind Verbrennungsmotoren nach dem Otto- und Dieselprinzip und Turbinen als Gas- oder Dampfturbinen ( M. Abbot/H.van Ness, Thermodynamik, McGraw-Hill,New-York).

Otto- und Dieselmotoren arbeiten als Hubkolben oder Kreiskolbenmotoren. Ein Arbeitsmedium wird angesaugt, verdichtet, verbrannt und die dadurch erreichte Druckerhöhung zur Gewinnung mechanischer Arbeit genutzt, indem eine Ausdehnung nur unter Bewegung einer Arbeitsfläche gestattet wird. Anschließend wird das verbrannte Medium ausgestoßen.

Bei Hubkolben- und Kreiskolbenmotoren sind das Maximalvolumen der Kammer, in der die Zustandsänderungen des Arbeitsmediums stattfinden (=Arbeitskammer), beim Ansaugprozeß (= maximales Ansaugvolumen) und das Maximalvolumen der Arbeitskammer beim Expansionsprozeß (= maximales Expansionsvolumen) gleich.Das in der maximalen Ansaugkammer befindliche Arbeitsmedium wird durch Verkleinerung der Kammer auf ihr Minimalvolumen verdichtet und damit sein Druck erhöht. Eine weitere Druckerhöhung erfährt das Arbeitsmedium durch Zündung dieses Gemischs bei gegenüber dem Minimalvolumen unveränderter (= Gleichraumprozeß) oder sich geringfügig vergrößernder (= gemischter Prozeß) Kammer. Ein Arbeitsprozeß bei dem das Volumen der Kammer nur bis zum Maximalen Ansaugvolumen vergrößert wird, kannden Inhalt der Kammer nicht bis zur völligen Entspannung auf den Außendruck nutzen. Es herrscht in der Arbeitskammer mit dem maximalen Ansaugvolumen beim Expansionsprozeß noch immer ein Überdruck. Dieser Restüberdruck wird ungenutzt an die Umwelt abgegeben. Damit führt dieser ungenutzte Teil der thermischen Energie auch noch zu thermischer Umweltverschmutzung.

Eine Möglichkeit der Leistungssteigerung ist durch Aufladung d.h. durch Vorverdichtung des angesaugten Arbeitsmediums möglich. Diese wird bisher durch mehr oder weniger aufwendige Konstruktionen erreicht.

Bei Hubkolbenmotoren ist ein zusätzlicher Nachteil, daß eine Bewegungsumformung einer Hin- und Herbewegung mit Totpunkten in eine Drehbewegung notwendig ist.

Für diese Nachteile will die Erfindung Abhilfe schaffen. Die Erfindung, wie sie in den Ansprüchen gekennzeichnet ist, löst die Aufgabe, die mit erhöhtem Druck stattfindende Expansion des Arbeitsmediums bis zur völligen Entspannung auf den Außendruck in mechanische Arbeit umzuwandeln und damit einen höheren thermischen Wirkungsgrad des Prozesses zu erzielen. Dies wird dadurch erreicht, daß im Prozeß das maximale Ansaugvolumen kleiner als das maximale Expansionsvolumen ist.
Gleichzeitig kann eine Aufladung ohne aufwendige Konstruktionen in dem Arbeitsverfahren des Motors integriert werden.
Eine Bewegungsumformung ist nicht notwendig, da die am "Kolben"angreifenden Kräfte direkt in eine Drehung umgewandelt werden.

Turbinen als Gas- oder Dampfturbinen erreichen die Umwandlung von thermischer Energie in mechanische Arbeit über den Umweg der kinetischen Energie. Ein Medium wird in einer Kammer erhitzt und damit ein Überdruck erzeugt. Über eine Öffnung in der Kammer kann der Überdruck abgebaut werden. Das Medium entströmt mit Geschwindigkeit durch diese Öffnung und trifft dabei auf ein Rad mit schräg zu Strömungsrichtung stehenden Flügeln (Turbine). Durch die kinetische Energie des strömenden Mediums wird auf die Flügel ein Druck ausgeübt und das Rad in Drehung versetzt.

Die Nachteile hier sind, daß der Turbinenprozeß ein relativ ungünstiges Arbeitsvermögen hat d.h. der Teil der zugeführten Wärmeenergie, der in mechanische Arbeit umgewandelt wird, ist deshalb relativ klein, weil zwischen zwei adiabatischen Zustandsänderungen eine isobare liegt, deren Umwandlungsgrad ungünstiger ist als eine isochore. Ein weiterer Nachteil ist, daß die Turbine andauernd den Maximaltemperaturen des Prozeßes ausgesetzt ist. Das Material der Flügel läuft dadurch Gefahr sich aufzulösen oder zumindest beschädigt zu werden. Daher ist die Maximaltemperatur des Prozesses nach oben beschränkt.

Des weiteren sind Turbinen und Verdichterwirkungsgrad nicht 100%. Neben anderen Verlusten ist Ursache dafür, daß ein Teil der Energie durch Reibungsverluste und Wirbelbildung vernichtet wird und ein Teil an Verdichter und Turbine vorbeiströmt.

Auch hierfür will die Erfindung Abhilfe schaffen. Der Prozeß, wie er nach der Erfindung abläuft, hat zwischen zwei adiabatischen Zustandsänderungen eine isochore. Daher ist sein Wirkungsgrad besser als bei Turbinen. Daneben ist dadurch, daß Vorrichtungen und Radfläche nur zeitweise den heißen Arbeitsmedium ausgesetzt sind und zwischenzeitlich gekühlt werden können, eine höhere Maximaltemperatur des Prozesses möglich. Damit kann das Arbeitsvermögen des Prozesses ebenfalls heraufgesetzt werden. Des weiteren entfallen Reibungsverluste und Wirbelbildung, da auch bei niedrigen Geschwindigkeiten der Prozeß mit gutem Thermischem Wirkungsgrad abläuft.

Die Maschine besteht aus drei wesentlichen Bestandteilen:
- dem Gehäuse,
- dem Kraftübertrager
- und den Dichtungsvorrichtungen.

Im Innenraum des Gehäuses ist der Kraftübertrager gelagert, der so bewegt werden kann, daß Punkte auf ihm in einer Ebene liegende, geschlossene Kurvenzüge mit nichtleerem Innengebiet durchlaufen. Der Kraftübertrager kann z.B. ein Körper sein, der um eine Achse gedreht wird (z.B.ein Rad). Die Kurvenzüge sind dann Kreise um die Achse. Er kann aber auch ein Band sein, das über Rollen geführt wird, oder ein Körper, der Bewegungen wie der Kreiskolben eines Wankelmotors ausführt. Die Kurvenzüge werden in diesem Falle durch den Bandverlauf bestimmt oder sind beim Wankelmotor Peritrochoiden.

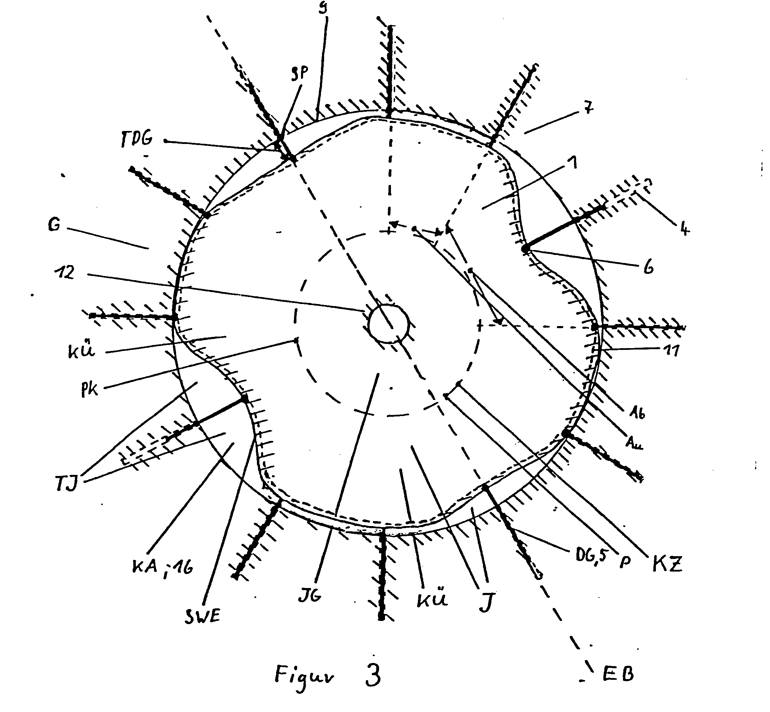

Im Gehäuseinnenraum sind die bewegbaren Dichtungsvorrichtungen so eingebaut, daß sie bei einem Durchlauf des Kurvenzuges durch die Punkte des Kraftübertragers (= Umlauf permanent oder zeitweise zwischen der Oberfläche des Kraftübertragers, der Gehäuseinnenwand und zwei Dichtungsvorrichtungen abgeschlossene Kammern bilden. Dieses Prinzip ist z.B. bei Flügelzellenpumpen bekannt, wo die Dichtungsvorrichtungen in Schlitzen verschiebbare Flügel sind, die aufgrund der schnellen Drehung des Rades (= Kraftübertragers) durch Fliehkraft gegen die Gehäuseinnenwand gepreßt werden. Im Gegensatz zur Flügelzellenpumpe wird bei der Erfindung aber die Stellung der Vorrichtungen unabhängig von der Geschwindigkeit des Kraftübertragers, sondern nur durch dessen relative Stellung zum Gehäuse gesteuert.(Patentanspruch 1) Das heißt, daß z.B. die Vorrichtungen Flügel sein können, die im Gehäuse bewegbar in Schlitzen stecken, mit dem Kraftübertrager aber über Führungsstifte oder Rollen so verbunden sind, daß die Flügel beim Umlauf des Kraftübertragers an der Oberfläche des Kraftübertragers entlangfahren (Fig. 3 ). Die Flügel können aber auch in Schlitzen im Kraftübertrager stecken und über Führungsstifte, die in Nuten in der Gehäuseinnenwand entlangfahren, mit dem Gehäuse verbunden sein (Patentanspruch 3). Neben den in Schlitzen steckenden Flügeln wären aber auch solche möglich, die um Achsen bewegt werden, also z.B. an den Kraftübertrager hin und von ihm hochgeklappt werden.

Wesentlich ist nur, daß die Fläche F der senkrechten Projektion des Teils der Vorrichtung (TDG ), der z.B. nicht im Schlitz steckt, in die Ebene (EB ), die durch die Drehachse des Kraftübertragers und durch einen Punkt des Schlitzes (SP ) am an den Gehäuseinnenraum anstoßenden Ende geht, verändert werden kann. Ist zum Beispiel der Kraftübertrager ein Rad, stecken die Vorrichtungen in Schlitzen in diesem und bilden zwei benachbarte Vorrichtungen, deren Flächen F ungleich groß sind, zwischen Gehäuseinnenwand und Rad eine Kammer und ist diese mit unter Druck stehendem Gas gefüllt, dann wirkt eine Drehkraft in Richtung der größeren Fläche auf das Rad.

Ein zweiter wesentlicher Unterschied zur Flügelzellenpumpe ist, daß die Vorrichtungen nicht permanent sowohl relativ zum Kraftübertrager als auch relativ zum Gehäuse bewegt sind, sondern daß sie bei einem Umlauf des Kraftübertragers zeitweise auch relativ zum Kraftübertrager oder relativ zum Gehäuse unbewegt sind. Das heißt, daß um den Kraftübertrager Abschnitte, auf denen der Abstand von Gehäuseinnenwand und der Oberfläche des Kraftübertragers konstant ist, mit solchen wechseln, auf denen er sich ändert.(Patentanspruch 2).

Auf Abschnitten mit konstantem Abstand brauchen die Vorrichtungen ihre Flächen F und damit ihre relativen Stellungen zum Gehäuse oder zum Kraftübertrager nicht zu ändern, auf Abschnitten mit sich vergrößerndem oder

-7-

verkleinerndem Abstand müssen die Vorrichtungen ihre
Fläche F und damit ihre Stellung ändern.
Im folgendem wird die Erfindung anhand von lediglich
einen Ausführungsweg darstellenden Zeichnungen näher
erläutert. Der Kraftübertrager ist dabei ein Rad und die
beweglichen Vorrichtungen sind dabei radial in Schlitzen
in diesem Rad verschiebbare Flügel. Ein ähnliches Prinzip wird bei Flügelzellenpumpen angewandt.

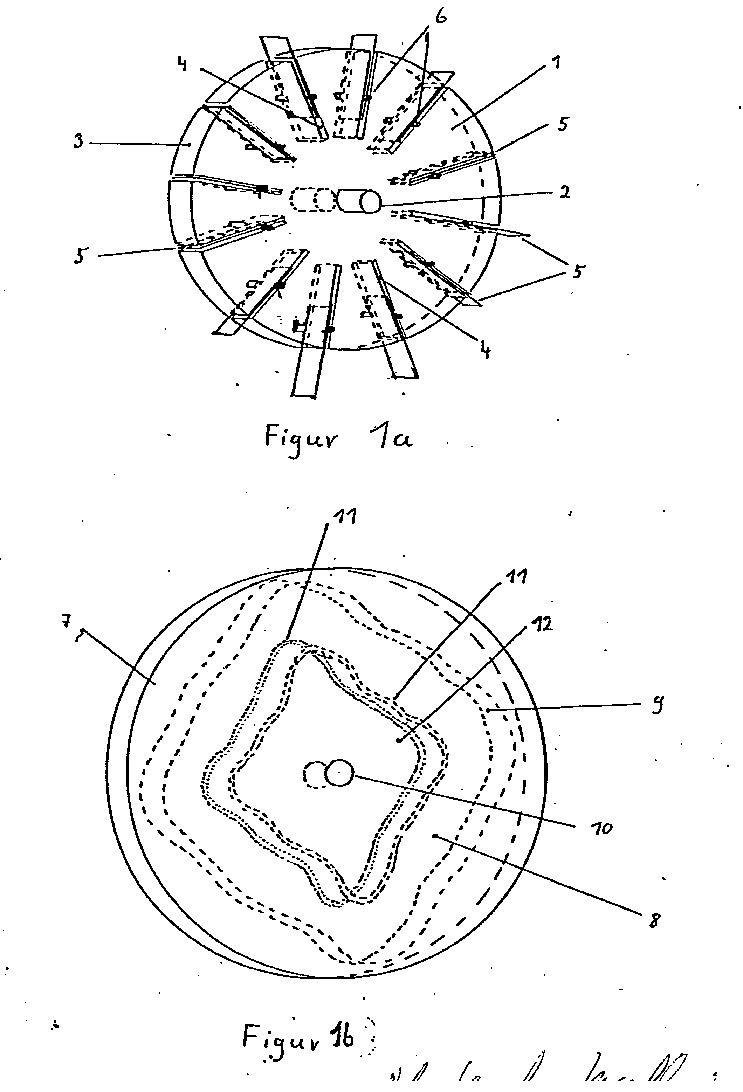

Figur1a zeigt das Rad (1) mit den beweglichen Vorrichtungen, -den in Schlitzen (4) radial verschiebbaren
Flügeln (5) - , in perspektivischer Sicht. An diesen
Flügeln sind Führungsstifte oder Führungsrollen (6) angebracht, die über die Radseite hinausragen und an denen
der Flügel von der Achse weg oder zur Achse hin bewegt
werden kann. An der Achse(2) wird mechanische Arbeit
entnommen oder zugeführt.
Figur 1b zeigt das Gehäuse (7) in perspektivischer Darstellung. Der Gehäuseinnenraum (8) ist so geformt, daß
er das Rad aufnehmen kann, durch die Form des Innenraums aber zwischen Radlauffläche und Gehäuseinnenwand (9) Abschnitte , in denen sich beide sehr nahe sind,
mit solchen abwechseln, in denen sie entfernter sind.
In der Mitte der Seitenwände des Gehäuses sind Öffnungen
(10) für die Radachse. Um diese Öffnungen laufen in den
Seitenwänden (12) Führungsnuten (11) für die Führungsstifte der Flügel.

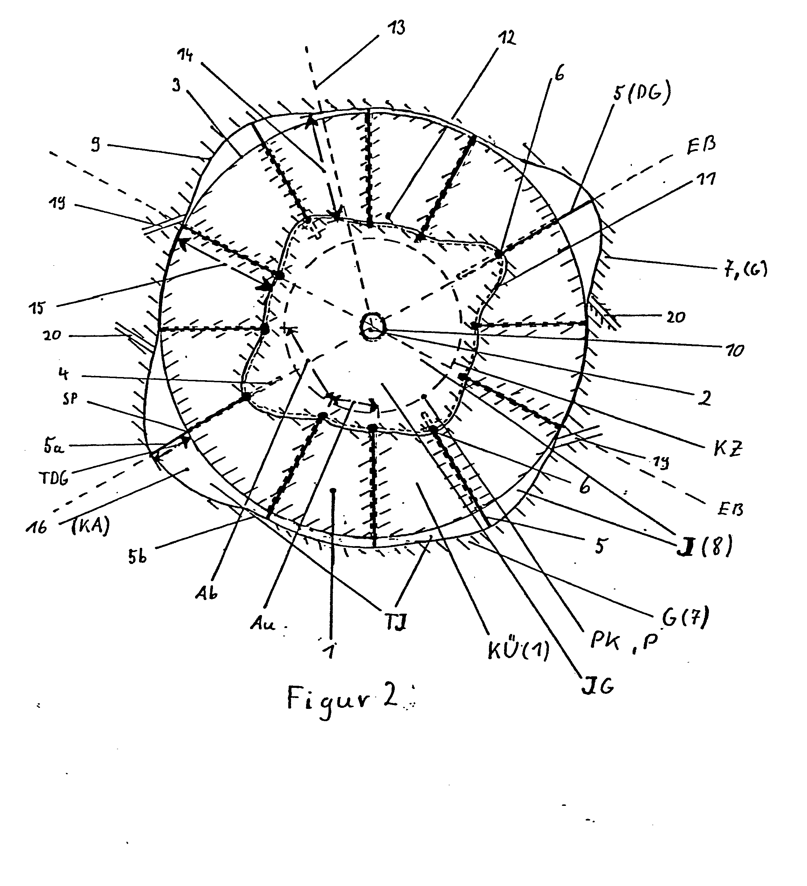

Figur 2 zeigt den zusammengebauten Motor in Seitensicht.
In den Gehäuseinnenraum (8) ist das Rad so eingesetzt,
daß die Achse (2) durch das achsenloch (10) gesteckt ist
und die Führungsstifte (6) der Flügel (5) in den Führungsnuten (11) in den Seitenwänden (12) stecken. Bei
Drehung des Rades fahren die Führungsstifte die Führungsnuten entlang und bewegen aufgrund der Form der
Führungsnuten die Flügel nach außen oder innen.

Anmeldung: 80104562.6

In diesem Fall ist die Form der Führungsnuten so, daß auf allen Strahlen vom Achsenmittelpunkt nach außen (13) der Abstand (14) zwischen Führungsnut und der Lauffläche gegenüberliegender Gehäuseinnenwand konstant eine Größe a hat. Ist der Abstand (15) zwischen Führungsstiften und Flügeloberkanten ebenfalls der Abstand a , so schleift die Flügeloberkante bei Drehung des Rades fortwährend an der Gehäuseinnenwand. Dadurch werden durch Lauffläche des Rades, zwei benachbarte Flügel (5a), (5b) und Gehäuseinnenwand abgeschlossene Kammern (16) gebildet. Ist die Fläche des vorderen Flügels (5a), die über die Lauffläche des Rades nach außen steht, größer als die des hinteren Flügels (5b) und herrscht in der Kammer (16) ein Überdruck, dann wird das Rad in Richtung des Vorderflügels gedreht.

Figur 3 zeigt eine Maschine im Seitenriß, bei der die Flügel ( 5 ) in Schlitzen ( 4 ) im Gehäuse hin- und herbewegt werden. Hier hat der Kraftübertrager Einbuchtungen, an deren "Seitenwänden" (SWE ) der Überdruck des Arbeitsmediums in Drehrichtung wirksam wird, da die Flügel als "Abstoßflächen" des Gehäuses wirken. Die Flügel sind über Führungsstifte oder Führungsrollen ( 6 ) in Nuten an der Oberfläche des Kraftübertragers so verankert, daß sie stets an der Oberfläche des Kraftübertragers schleifen.

Im Nachfolgenden sei wieder nur eine Maschine beschrieben, bei der die Flügel in Schlitzen im Kraftübertrager bewegt werden.

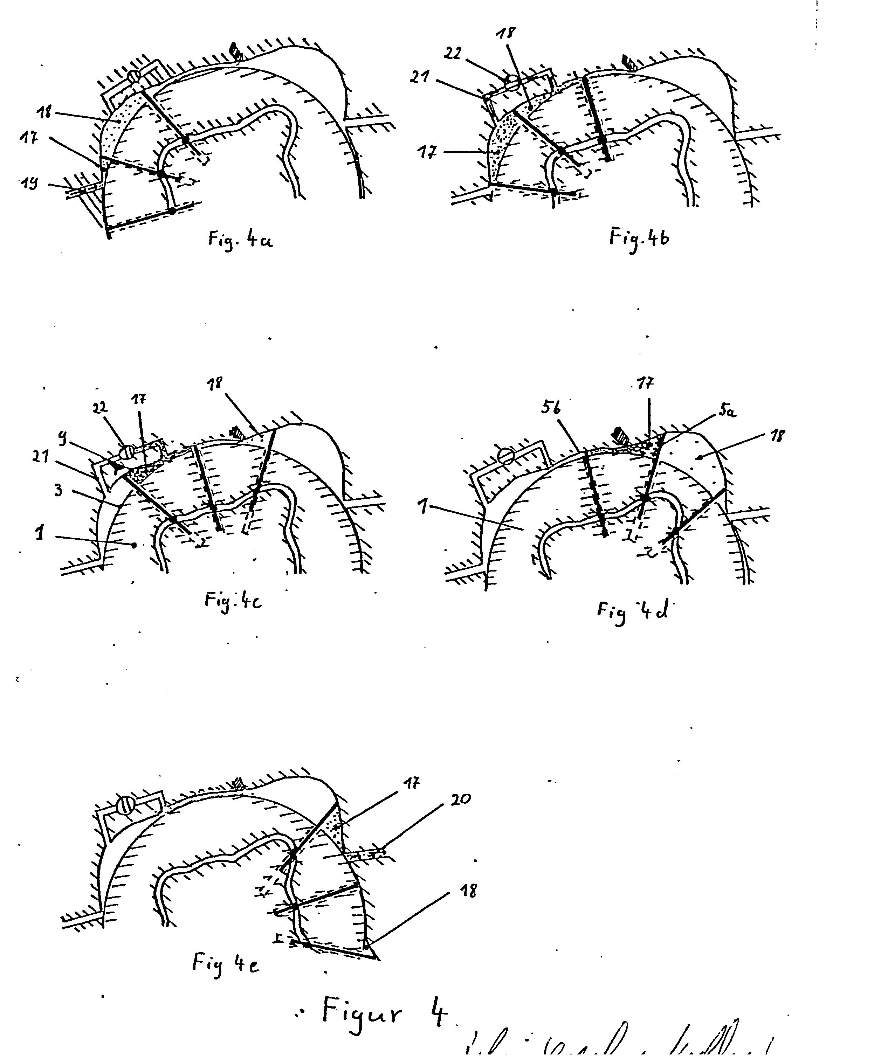

Figur 4, a -e zeigt die Maschine als Verbrennungsmotor nach dem Viertaktprinzip mit im Motor integrierter Aufladung als fünfter Takt (Fig. 4b) bzw. als zweiter in Folge. Zur Vereinfachung der Darstellung ist in den

Abbildungen nur der Teil des Gehäuses gezeigt, in dem eine Aufeinanderfolge der vier (fünf) Takte stattfindet. Dabei sind nur die beiden Kammern bzw. die drei Flügel gezeigt, die direkt an diesem Prozess beteiligt sind.

Figur 4a zeigt den Ansaugprozeß. Durch Vergrößern der Arbeitskammer(17) entsteht ein Unterdruck. Durch den Ansaugkanal(19) wird das Gemisch (= Arbeitsmedium) angesaugt. Die Zwischenkammer (18),die analog gefüllt wurde, wird zum Verdichtungsbereich gebracht.

Figur 4b zeigt den Aufladevorgang. Die Arbeitskammer (17) steht über den Ladekanal.(21), der nun durch ein Ventil geöffnet ist,. mit der Zwischenkammer (18) in Verbindung. Durch Verkleinern der Zwischenkammer wird deren Inhalt in die Arbeitskammergedrückt. Die Arbeitskammer hat keine Verbindung mehr mit außen, daher erfolgt in ihr eine Druckerhöhung.

Figur 4c zeigt den Verdichtungsvorgang. Durch weitere Drehung des Rades (1) kommt die Arbeitskammer in den Bereich, in dem sich der Abstand zwischen Gehäuseinnenwand (9) und Radlauffläche (3) so verringert und damit das Volumen der Arbeitskammer verkleinert, daß der Inhalt der Arbeitskammer im gewünschten Maße verdichtet wird. Das Ventil (22) des Ladekanals(21) ist in diesem Stadium geschlossen, sodaß der Inhalt der Arbeitskammernicht entweichen kann.

Figur 4d zeigt den Arbeitstakt. Das verdichtete Gemisch in der Arbeitskammer(17) wird zur weiteren Druckerhöhung gezündet. Die Fläche des Vorderflügels (5a) und damit der Druck darauf ist größer als die Fläche des bzw. der Druck auf den Hinterflügel (5b). Damit wirkt eine Kraft in die Drehrichtung des Rades(1).

Figur 4e zeigt den Ausstoßtakt. Durch Verkleinerung der Arbeitskammer (17) wird das verbrannte Gemisch durch den Ausstoßkanal (20) nach außen gedrückt.

Anmeldung: 80104562.6

Die Vorteile der Nutzung dieser Maschine als Verbrennungsmotor sind unter anderen folgende :

1. Höherer thermischer Wirkungsgrad durch gegenüber
   dem maximalen Ansaugvolumen wesentlich vergrößertem
   maximalen Expansionsvolumen.

2. Keine Bewegungsumformung notwendig, da die Kräfte
   tangential angreifen.

3. Aufladung als Bestandteil der Motorkonstruktion
   möglich.

4. Gleichmäßigeres Drehmoment durch wachsende Arbeitsfläche bei sinkendem Arbeitsdruck.

5. Geringere Energieverluste beim Ausstoßtakt durch
   Möglichkeiten zur größeren Dimensionierung des Ausstoßkanals.

6. Bessere Schalldämmung des Motors durch Ausstoß von
   völlig entspanntem Gas.

7. Geringe Massenkräfte durch wenig bewegte Teile
   (Flügel).

Die Größenordnug der Verbesserung des thermischen Wirkungsgrades soll nachfolgend gezeigt werden.
( Der Beweis folgt dem in :
Grohe, Heinz; Otto- und Dieselmotoren; 4.Auflage, Vogel-
verlag Würzburg; S.46  3.2.3 Thermischer Wirkungsgrad)

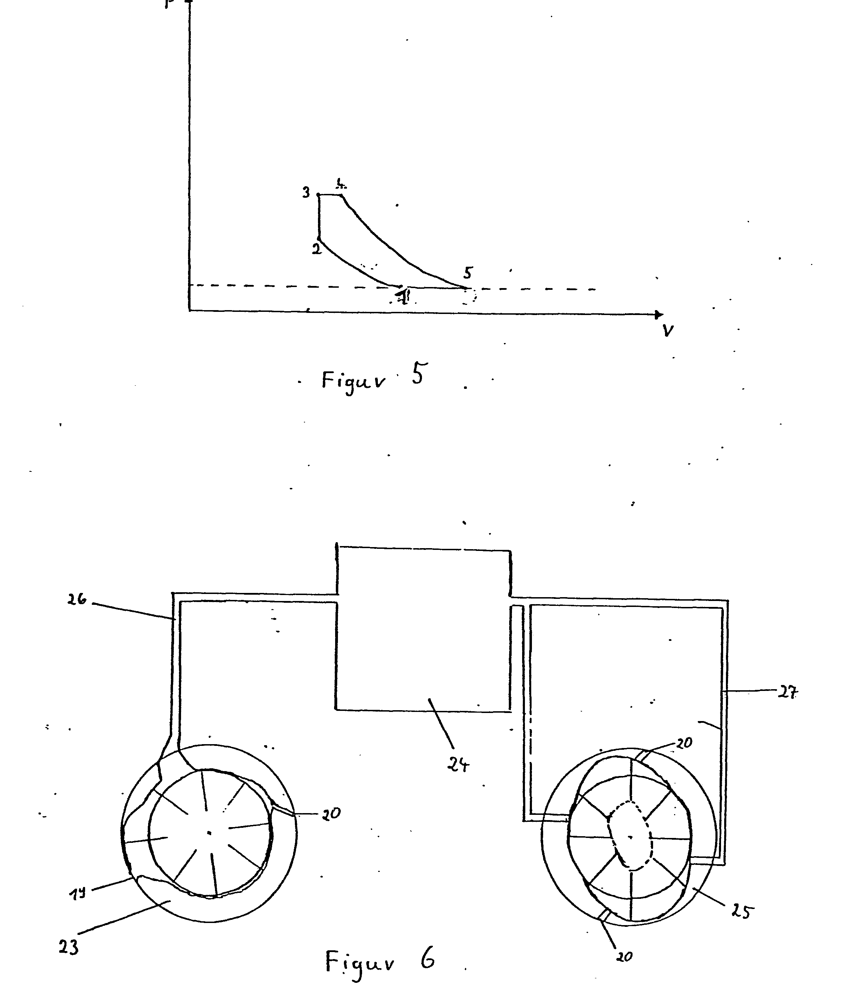

Figur 5  gibt den Ablauf des gemischten Vergleichsprozesses in der p,V, -Ebene wieder. Die Prozeßfolge dabei
ist:

| | |
|---|---|
| 1 → 2 | isentrope Verdichtung |
| 2 → 3 | isochore Wärmezufuhr |
| 3 → 4 | isobare Wärmezufuhr |
| 4 → 5 | isentrope Ausdehnung |
| 5 → 1 | isobare · Wärmeabfuhr |

### A. Errechnung der Formel

$P_1, P_2, P_3, P_4, P_5$ sind die Drücke in den Punkten 1 - 5

$T_1, T_2, T_3, T_4, T_5$ " " Temperaturen " " 1 - 5

$V_1, V_2, V_3, V_4, V_5$ " " Volumina " " 1 - 5

$\Phi_z$ := zugeführte Wärmeenergie

$\Phi_a$ := abgeführte Wärmeenergie

$\Phi_n$ := genutzte Wärmeenergie

$c_v, c_p$ := spezifische Wärmekapazitäten des Gemischs

$m$ := Gasmasse je Arbeitsspiel

$\eta_{th}$ := thermischer Wirkungsgrad

$$\varepsilon := \frac{V_1}{V_2} = \text{Verdichtungsverhältnis}$$

$$\xi := \frac{P_3}{P_2} = \frac{T_3}{T_2} = \text{Drucksteigerungsverhältnis}$$

$$\psi := \frac{V_4}{V_3} = \frac{T_4}{T_3} = \text{Einspritzverhältnis}$$

Es gilt: $\eta_{th} = \dfrac{\Phi_n}{\Phi_z} = \dfrac{\Phi_z - \Phi_a}{\Phi_z} = 1 - \dfrac{\Phi_a}{\Phi_z}$

und: $\Phi_z = Q_1 + Q_2$

mit: $Q_1 :=$ (Wärmezufuhr bei V= konstant)

$= m \cdot c_v \cdot (T_3 - T_2) = m \cdot c_v \cdot T_2 \cdot \left( \dfrac{T_3}{T_2} - 1 \right);$

$Q_2 :=$ (Wärmezufuhr bei p = konstant)

$= m \cdot c_p \cdot (T_4 - T_3) = m \cdot c_p \cdot T_3 \cdot \left( \dfrac{T_4}{T_3} - 1 \right);$

$$K := \frac{c_p}{c_v} = \text{Isotropenexponent}$$

Für die isentrope Zustandsänderung von 1 nach 2 gilt:

$$T_2 = T_1 \cdot \varepsilon^{k-1}$$

Anmeldung: 80104562.6

Mit den vorstehenden Beziehungen kann man die je Arbeitsspiel zugeführte Wärme schreiben:

$$\Phi_z = Q_1 + Q_2 = m \cdot c_v \cdot \left[ \left( \frac{T_3}{T_2} - 1 \right) \cdot T_2 + \kappa \cdot \left( \frac{T_4}{T_3} - 1 \right) \cdot T_3 \right] =$$

$$= m \cdot c_v \cdot \left[ (\xi - 1) \cdot T_1 \cdot \varepsilon^{\kappa-1} + \kappa \cdot (\psi - 1) \cdot T_2 \xi \right] =$$

$$= m \cdot c_v \cdot T_1 \cdot \varepsilon^{\kappa-1} \left[ \xi - 1 + \kappa \cdot \xi (\psi - 1) \right] \; ;$$

Die je Arbeitsspiel abgeführte Wärme ist:

$$\Phi_a = m \cdot c_v \cdot (T_5 - T_1) = m \cdot c_v \cdot T_1 \cdot \left( \frac{T_5}{T_1} - 1 \right);$$

Es sei $\quad V_5 := \alpha \cdot V_1 \;, \alpha > 1$

Für $\quad \dfrac{T_5}{T_1} = \dfrac{T_5}{T_4} \cdot \dfrac{T_4}{T_3} \cdot \dfrac{T_3}{T_2} \cdot \dfrac{T_2}{T_1} \quad$ erhält man mit

$$\frac{T_5}{T_4} = \left( \frac{V_4}{V_5} \right)^{\kappa-1} \text{und} \quad \left( \frac{V_4}{V_5} \right)^{\kappa-1} = \left( \frac{V_4}{\alpha \cdot V_1} \cdot \frac{V_2}{V_2} \right)^{\kappa-1} = \frac{1}{\alpha^{\kappa-1}} \left( \frac{V_4}{V_1} \cdot \frac{V_2}{V_2} \right)^{\kappa-1} ;$$

( im Gegensatz zum herkömmlichen Hubkolbenmotor oder zum

Wankelmotor, wo: $\left( \dfrac{V_4}{V_5} \right)^{\kappa-1} = \left( \dfrac{V_4}{V_1} \cdot \dfrac{V_2}{V_2} \right)^{\kappa-1}$ )

$$\left( \frac{V_4}{V_1} \cdot \frac{V_2}{V_2} \right)^{\kappa-1} = \left( \frac{V_4}{V_3} \cdot \frac{V_2}{V_1} \right)^{\kappa-1} = \left( \psi \cdot \frac{1}{\varepsilon} \right)^{\kappa-1}$$

Dann ist $\dfrac{T_5}{T_1} = \dfrac{1}{\alpha^{\kappa-1}} \left( \psi \cdot \dfrac{1}{\varepsilon} \right)^{\kappa-1} \cdot \psi \cdot \xi \cdot \varepsilon^{\kappa-1} = \dfrac{1}{\alpha^{\kappa-1}} \cdot \psi^{\kappa} \cdot \xi$

und $\Phi_a = m \cdot c_v \cdot T_1 \cdot \left( \dfrac{1}{\alpha^{\kappa-1}} \cdot \psi^{\kappa} \cdot \xi - 1 \right);$

Damit ist: $\eta_{th} = 1 - \dfrac{\Phi_a}{\Phi_z} = 1 - \dfrac{m \cdot c_v \cdot T_1 \left( \frac{1}{\alpha^{\kappa-1}} \cdot \psi^{\kappa} \cdot \xi - 1 \right)}{m \cdot c_v \cdot T_1 \cdot \varepsilon^{\kappa-1} \left[ \xi - 1 + \kappa \cdot \xi (\psi - 1) \right]} .$

$$= 1 - \frac{1}{\varepsilon^{\kappa-1}} \cdot \frac{\frac{1}{\alpha^{\kappa-1}} \psi^{\kappa} \cdot \xi - 1}{\xi - 1 + \kappa \cdot \xi (\psi - 1)} \; ;$$

B. Errechnung von $\alpha$ für $p_1 = p_5$ = Außendruck

Es gilt $\alpha = \dfrac{V_5}{V_1}$ und $V_5^\kappa \cdot p_5 = V_4^\kappa \cdot p_4$ (adiabatisch/isent.)

und $V_2^\kappa \cdot p_2 = V_1^\kappa \cdot p_1$ (adiabatisch/isent.)

und $V_2 = V_3$ (isochor)

und $p_3 = p_4$ (isobar)

Dann folgt aus $V_5^\kappa \cdot p_5 = V_4^\kappa \cdot p_3$, $\Longrightarrow V_5 = \dfrac{V_4 \cdot p_3^{\frac{1}{\kappa}}}{p_5^{\frac{1}{\kappa}}}$

und aus $V_1^\kappa \cdot p_1 = V_3^\kappa \cdot p_2 \Longrightarrow V_1 = \dfrac{V_3 \cdot p_2^{\frac{1}{\kappa}}}{p_1^{\frac{1}{\kappa}}}$

Wegen $p_1 = p_5$ gilt dann

$$\alpha = \frac{V_5}{V_1} = \frac{V_4}{V_3} \cdot \left(\frac{p_3}{p_2}\right)^{\frac{1}{\kappa}} = \psi \cdot \zeta^{\frac{1}{\kappa}}$$

und $\dfrac{1}{\alpha^{\kappa-1}} = \dfrac{1}{\psi^{\kappa-1} \cdot \zeta^{\frac{\kappa-1}{\kappa}}}$

Damit wird dann $\eta_{th} = 1 - \dfrac{1}{\varepsilon^{\kappa-1}} \cdot \dfrac{\frac{1}{\zeta^{\frac{\kappa-1}{\kappa}} \cdot \psi^{\kappa-1}} \cdot \psi^\kappa \cdot \zeta - 1}{\zeta - 1 + \kappa \cdot \zeta(\psi - 1)} =$

$$= 1 - \frac{1}{\varepsilon^{\kappa-1}} \frac{\psi \cdot \zeta^{\frac{1}{\kappa}} - 1}{\zeta - 1 + \kappa \cdot \zeta(\psi - 1)} ;$$

Bei "Grohe, Heinz..." s.o. wird der thermische Wirkungsgrad eines herkömmlichen <u>Dieselmotors</u> mit folgenden Daten errechnet:

$$K = 1,4; \quad \zeta = 1,34; \quad \psi = 2,3; \quad \varepsilon = 20;$$

Dann ist

$\eta_{th}$ (Hubkolben- oder Wankelmotor) = 0,642 Für den Idealprozeß des mit der Erfindung gebauten Dieselmotors ergibt sich mit obigen Werten ein thermischer Wirkungsgrad von:

$\eta_{th}$ (Erfindung) = 0,801

Analog errechnet sich eine Verbesserung des <u>Ottomotors.</u>
Sei: $K = 1,4$; $\xi = 3$; $\psi = 1$; $\varepsilon = 9$;

Dann gilt für den herkömmlichen, vollkommenen Hubkolben- oder Wankelmotor ( nach Grohe s.o.)

$$\eta_{th} \text{ (Hubkolben- oder Wankelmotor)} = 0,585$$

Für den Idealprozeß des nach der Erfindung gebauten Ottomotors errechnet sich mit obigen Daten:

$$\eta_{th} \text{ (Erfindung )} = 0,753$$

Damit ist der thermische Wirkungsgrad des nach der Erfindung gebauten Verbrennungsmotors als Dieselmotor um ca. 25% höher, als Ottomotor um ca. 28% höher als bei Hubkolben- oder Wankelmotoren.

Eine weitere Möglichkeit dieses Maschinenprinzip einzusetzen ist für einen Prozeß, bei dem ein Arbeitsmedium in eine Kammer gebracht, dort durch Wärmezuführung aus einem Wärmespeicher seine innere Energie erhöht und dann in einem Arbeitsprozeß das Expansionsbestreben des Mediums durch erzwungene Bewegung einer Arbeitsfläche zur Umwandlung in mechanische Arbeit genutzt wird. Für solche Prozesse werden heute z.B. Dampf-oder Gasturbinen eingesetzt.

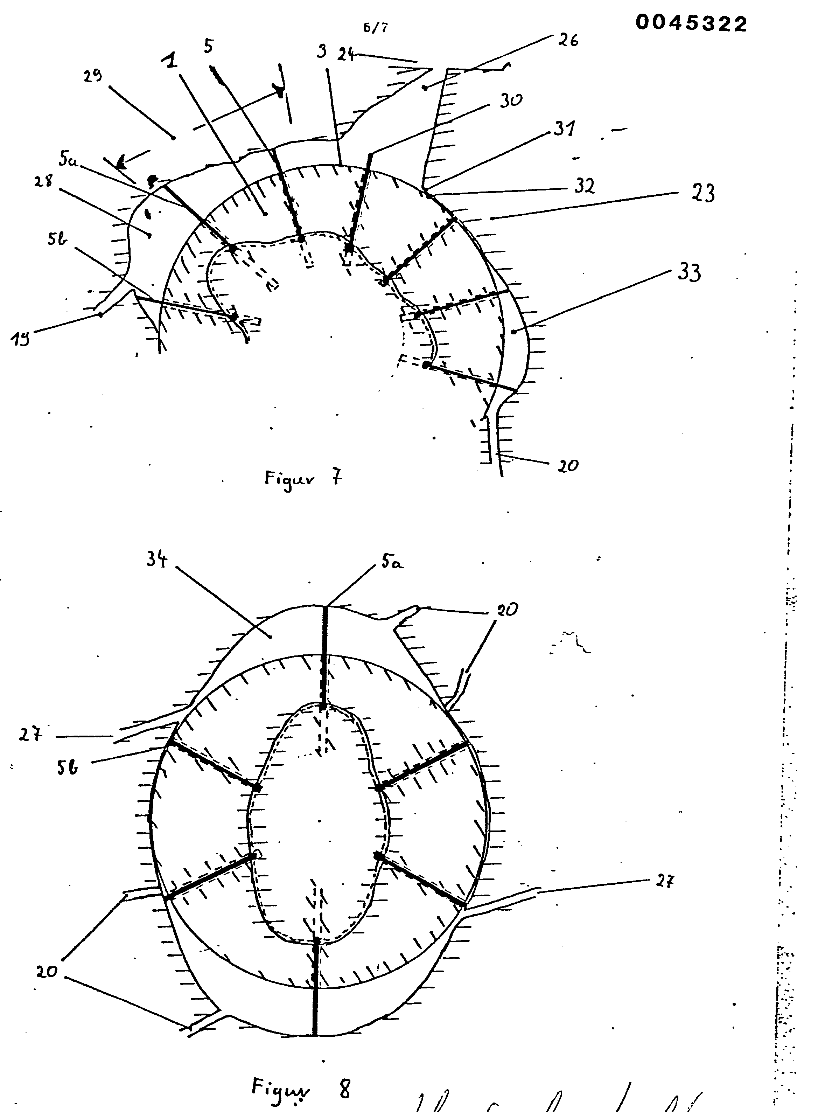

Figur 6 zeigt den Aufbau des Prozesses. Eine nach den Patentansprüchen gebaute Maschine (23), die dadurch gekennzeichnet ist, daß sie permanent ein Gas oder einen Dampf von einem Ort niedrigeren Drucks an einen Ort höheren Druckes transportieren kann, ohne daß dazu das Arbeitsmedium beschleunigt werden muß, wird dabei zur Zuführung benutzt. Diese Maschine (23) bringt das Arbeitsmedium unverdichtet oder bereits vorverdichtet in eine Heizkammer (24). Dort wird die Temperatur und damit der Druck des Arbeitsmediums durch permanente Wärmezuführung erhöht. Über die Arbeitsmaschine (25), die ebenfalls eine nach den Patentansprüchen gebaute Maschine ist, wird dieser erhöhte Druck entspannt und dabei das Entspannungsbestreben des Arbeitsmediums zur Gewinnung mechanischer Arbeit genutzt.

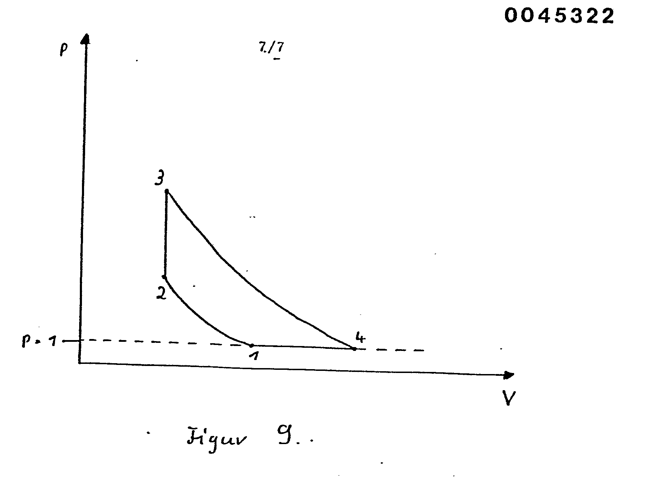

Figur 7 zeigt die Maschine (23), die das Arbeitsmedium in die Heizkammer transportiert. Dabei ist nur der Teil der Maschine gezeigt, der an einem vollständigen Zuführungs und Teilentspannungsprozeß beteiligt ist. Durch den Ansaugkanal(19) wird ein Medium der Masse m und des Volumens $V_a$ der Kammer (28) mit dem maximalen Ansaugvolumen angesaugt. Durch Drehung des Rades (1) wird auch der hintere Flügel (5b) am Ansaugkanal vorbeigeführt und damit die Kammer (28) abgeschlossen. Durch Verkleinern der Kammer ( im Bereich (29)) wird im Idealprozeß der Inhalt adiabatisch verdichtet. Durch weiteres Drehen des Rades wird die Kammer zum Heizraumzuführungskanal (26) geöffnet. Weiterdrehen des Rades bewirkt ein vollständiges Einziehen der Flügel (5) in das Rad. Die über die Lauffläche (3) des Rades hinausragende Flügelkante (30) berührt im Punkt (31) wieder die Gehäuseinnenwand. Somit kann durch den Schlitz (32) zwischen Rad und Gehäuse kein Arbeitsmedium entweichen bzw. nur ein minimaler Teil, der durch Expansion in der nachfolgenden Kammer (33) seine Energie wieder dem Verdichter zuführt.

Befand sich vor dem Zuführungsprozeß in der Heizkammer(24) ein Arbeitsmedium der Masse M, so befindet sich danach eines der Masse M +m darin. Zur Beibehaltung einer konstanten Masse M in der Heizkammer muß eine Masse m des Arbeitsmediums wieder abgeführt werden.

Dies geschieht in der Arbeitsmaschine( Figur 8 ). Über den Heizraumabführungskanal (27) ist die Maschine mit dem Heizraum verbunden. Die Zelle (34) wird mit dem Arbeitsmedium der Masse j gefüllt. Dessen Druck wurde durch Wärmezuführung erhöht. Eine Entspannung findet durch den höheren Gesamtdruck auf den (größeren) Vorderflügel (5a) unter Abgabe von Drehenergie statt. Das entspannte Medium wird durch den Ausstoßkanal (20) nach außen abgegeben.

Daß die in der Arbeitsmaschine gewonnene Arbeit tatsächlich größer ist als die in der Zuführungsmaschine hineingesteckte mechanische Arbeit, soll nachfolgend gezeigt werden. Um die Masse m (zur Vereinfachung ohne Verdichtung) in die Heizkammer zu bringen, muß die Fläche F des Vorderflügels (5a) der Zelle (28) bei der Zuführungsmaschine (Figur 7 ) um die Zellenlänge l gegen den in der Heizkammer(24) herrschenden Druck $p_H$ bewegt werden. Dann wird die Zelle (28) durch den Heizraumzuführungskanal(26) zum Heizraum geöffnet und der Druck auf den Flügel(5a) ist von beiden Seiten gleich. Folglich ist die hineingesteckte Arbeit

$$A_i = p_H \cdot F \cdot l .$$

Eine Masse m des Arbeitsmediums wird aber gleichzeitig auch wieder abgeführt. Diese hat das gleiche Volumen wie die Zuführungszelle, da Masse und Volumen der Heizkammer annähernd konstant bleiben ( bis auf die relativ zur Heizraumgröße geringfügigen Veränderungen durch die Zellenbewegungen). Ist nun die Länge zwischen zwei Flügeln an der Arbeitsmaschine (Figur 8 ) ebenfalls gleich die Länge 1 der Zelle der Zuführungsmaschine und hat, wenn der Hinterflügel (5b) der Zelle(34) an der Arbeitsmaschine den Heizraumabführungskanal (27) überstreicht und damit die Zelle (34) abschließt, deren Vorderflügel die Fläche F, dann gilt folgendes:

Das Volumen der Zelle (34) ist $\frac{1 \cdot F}{2}$. Der durchschnittliche Druck auf den Vorderflügel ist $p_H \cdot \frac{F}{2}$. Um nun die Masse m mit dem Volumen $1 \cdot F$ abzuführen, müssen zwei Zellen am Heizraumabführungskanal(27) vorbeigeführt werden. Das heißt,daß die Fläche $\frac{F}{2}$ mit dem Druck $p_H$ die Strecke 2 1 weit bewegt wird. Die damit gewonnene Arbeit ist $A_g = p_H \cdot \frac{F}{2} \cdot 2 \cdot 1 = p_H F \cdot 1 = = A_i$. Damit wird die zugeführte mechanische Arbeit wieder zurückgewonnen. Da aber die abgeführte Masse m eine höhere innere Energie hat als die zugeführte, wird bis zu Entspannung auf den Außendruck zusätzlich mechanische Arbeit gewonnen.

Die Vorteile dieses Prinzips sind:

1.Höherer thermischer Wirkungsgrad als bei Turbinen durch isochore anstatt isobarer Zustandsänderung zwischen zwei adiabatischen Zustandsänderungen.

2.Höhere Temperaturen vor Arbeitsmaschine möglich,da Flügel nur zeitweise den Maximaltemperaturen des Prozesses ausgesetzt sind und eine zwischenzeitliche Kühlung möglich ist.

3.Bessere (?) Wirkungsgrade der Zuführungs- und Arbeitsmaschinen, da Zellen dichter abschließen als bei Turbinen und keine Energieverluste durch Reibung und Wirbelbildung im Arbeitsmedium auftreten.

Für diesen Prozeß soll nachfolgend der thermische Wirkungsgrad errechnet werden. Figur $9$ zeigt den Prozeßablauf in der p,V - Ebene. Die Übergänge von den numerierten Punkten bedeuten dabei folgende Zustandsänderungen:

$$1 \longrightarrow 2 \qquad \text{adiabatische Verdichtung}$$
$$2 \longrightarrow 3 \qquad \text{isochore Erwärmung}$$
$$3 \longrightarrow 4 \qquad \text{adiabatische Expansion}$$
$$4 \longrightarrow 1 \qquad \text{isobare Wärmeabführung}$$

Der thermische Wirkungsgrad dieses Prozesses ergibt sich als:

$$\eta_{th} = \frac{\text{zugeführte Energie} - \text{abgeführte Energie}}{\text{zugeführte Energie}}$$

$$= \frac{(T_3 - T_2) - (T_4 - T_1)}{(T_3 - T_2)} =$$

$$= 1 - \frac{(T_4 - T_1)}{(T_3 - T_2)} ;$$

Zur Bestimmung der Größen in den Punkten gehe man von Punkt 1, Figur $9$ aus. Dort sei gegeben:

Punkt 1: $\qquad V_1 := V_1 ; \qquad T_1 := T_1 ; \qquad p_1 := p_1 ;$

Der Übergang von 1 nach 2 ist eine adiabatische Verdichtung. Der Verdichtungsfaktor sei $\varepsilon$, d.h. $V_2 = \frac{V_1}{\varepsilon}$. Weiterhin gilt wegen adiabatisch:

$$\frac{T_2}{T_1} = \left(\frac{V_1}{V_2}\right)^{k-1} ; \qquad \frac{p_2}{p_1} = \left(\frac{V_1}{V_2}\right)^{\kappa} ;$$

Daher ergeben sich folgende Werte für

Punkt 2: $\qquad V_2 := \frac{V_1}{\varepsilon} ; \qquad T_2 = \varepsilon^{k-1} \cdot T_1 ; \qquad p_2 = p_1 \cdot \varepsilon^{\kappa} ;$

Der Übergang von 2 nach 3 erfolgt isochor, daher ist

$$V_3 = V_2 ; \qquad \frac{T_2}{T_3} = \frac{p_2}{p_3} ;$$

Folglich : $p_3 = \dfrac{T_3 \cdot P_2}{T_2} = \dfrac{T_3 \cdot P_1 \cdot \varepsilon^{\kappa}}{T_1 \cdot \varepsilon^{\kappa-1}} = \dfrac{T_3}{T_1} \cdot P_1 \cdot \varepsilon$ ;

Die Temperatur $T_3$ wird durch die zugeführte Energiemenge festgelegt. Daher gilt in

Punkt 3: $\quad V_3 = \dfrac{V_1}{\varepsilon}$ ; $\quad T_3 = T_3$ ; $\quad P_3 = \dfrac{T_3}{T_1} \cdot P_1 \cdot \varepsilon$ ;

Die Expansion von 3 nach 4 erfolgt wiederum adiabatisch. Dabei sei der Druck in Punkt 4 gleich dem Außendruck d.h. $P_4 = P_1$ . Damit errechnen sich :

$$V_4 = \left(\frac{p_3}{p_4} \cdot V_3^{\kappa}\right)^{\frac{1}{\kappa}} = \left(\frac{\frac{T_3}{T_1} \cdot P_1 \cdot \varepsilon}{P_1}\right)^{\frac{1}{\kappa}} \cdot \frac{V_1}{\varepsilon} = \left(\frac{T_3}{T_1}\right)^{\frac{1}{\kappa}} \cdot \varepsilon^{\frac{1}{\kappa}-1} \cdot V_1 ;$$

$$T_4 = T_3 \left(\frac{P_4}{P_3}\right)^{\frac{k-1}{k}} = T_3 \left(\frac{P_1}{\frac{T_3}{T_1} \cdot \varepsilon \cdot P_1}\right)^{\frac{k-1}{k}} = T_3 \cdot \left(\frac{T_1}{T_3 \cdot \varepsilon}\right)^{\frac{k-1}{k}} =$$

$$= T_3 \cdot T_3^{\frac{1-k}{k}} \cdot T_1^{\frac{k-1}{k}} \cdot \varepsilon^{\frac{1-k}{k}} = T_1 \cdot \left(\frac{T_3}{T_1}\right)^{\frac{1}{\kappa}} \cdot \varepsilon^{\frac{1}{k}-1} ;$$

Damit gilt dann in

Punkt 4: $\quad V_4 = \left(\dfrac{T_3}{T_1}\right)^{\frac{1}{k}} \cdot \varepsilon^{\frac{1}{k}-1} \cdot V_1$ ; $\quad T_4 = T_1 \left(\dfrac{T_3}{T_1}\right)^{\frac{1}{k}} \varepsilon^{\frac{1}{k}-1}$ ; $\quad P_4 = P_1$ ;

Damit ergibt sich für den thermischen Wirkungsgrad dieses Pozesses folgende Formel:

$$\eta_{th} = 1 - \frac{(T_4 - T_1)}{(T_3 - T_2)} = 1 - \frac{T_1 \left(\left(\frac{T_3}{T_1}\right)^{\frac{1}{k}} \cdot \varepsilon^{\frac{1-k}{k}} - 1\right)}{T_1 \left(\frac{T_3}{T_1} - \varepsilon^{k-1}\right)} =$$

$$= 1 - \frac{\left(\left(\frac{T_3}{T_1}\right)^{\frac{1}{k}} \varepsilon^{\frac{1-k}{k}} - 1\right)}{\left(\frac{T_3}{T_1} - \varepsilon^{k-1}\right)} ;$$

Setzt man nun $T_3 = \xi \cdot T_2 = \xi \cdot \varepsilon^{k-1} \cdot T_1$ , dann gilt:

$$\eta_{th} = 1 - \frac{\left(\left(\frac{\xi \cdot \varepsilon^{k-1} \cdot T_1}{T_1}\right)^{\frac{1}{k}} \cdot \varepsilon^{\frac{1-k}{k}} - 1\right)}{\left(\frac{\xi \cdot \varepsilon^{k-1} T_1}{T_1} - \varepsilon^{k-1}\right)} = 1 - \frac{1}{\varepsilon^{k-1}} \cdot \frac{\xi^{\frac{1}{k}} - 1}{\xi - 1} ;$$

Zur Vergleichbarkeit des Wirkungsgrades dieses Prozesses mit dem Gasturbinenprozess soll anstatt des Verdichtungsverhältnisses $\mathcal{E}$ das Drucksteigerungsverhältnis $\pi$ in die Formel eingesetzt werden.

Wegen :

$$\pi = \frac{p_2}{p_1} = \left(\frac{V_1}{V_2}\right)^k = \mathcal{E}^\kappa \; ; \quad \text{gilt} \quad \mathcal{E} = \pi^{\frac{1}{k}}$$

Daher ist der thermische Wirkungsgrad des Prozesses

$$\eta_{th} = 1 - \frac{1}{\mathcal{E}^{k-1}} \frac{\mathcal{E}^{\frac{1}{k}} - 1}{\frac{\mathcal{E}}{\eta} - 1} = 1 - \frac{1}{\pi^{\frac{k-1}{k}}} \frac{\mathcal{E}^{\frac{1}{k}} - 1}{\frac{\mathcal{E}}{\eta} - 1}$$

im Gegensatz zum thermischen Wirkungsgrad des Gasturbinenprozesses ( Dietzel,Fritz; Gasturbinen; Vogel-Verlag, Würzburg; S.12 f) bei dem

$$\eta_{th} = 1 - \frac{1}{\pi^{\frac{k-1}{k}}} \; ;$$

Das Arbeitsvermögen hängt aber auch von der maximalen Prozeßtemperatur ab. Der optimale Arbeitsgrad des Turbinenprozesses ·bei der ( bei heutigen Turbinen annähernden Maximal- ) Temperatur von 1200°C liegt bei ca. $\pi = 18$ ( siehe:Dietzel,F; ..). Dort ist daher:

$$\pi = 18 \Longrightarrow \eta_{th} = 1 - \frac{1}{18^{0,285}} = 0,5612 \; ;$$

Für $\pi = 18$ ist $\mathcal{E} \approx 8$.
Der thermische Wirkungsgrad des beschriebenen Prozesses ist somit bei:

$$T_1 = 15°C = 288°K; \; T_3 = 1200°C = 1473°K \; ; \; \mathcal{E} = 8 \; ;$$

$$\eta_{th} \text{ (Erfindung)} = 1 - \frac{\frac{1473^{0,714}}{288} \quad 8^{-0,286} \quad -1}{\frac{1473}{288} \quad - \quad 8^{1,4} - 1} =$$

$$= 1 - \frac{0,770}{2,818} = 0,726 \; ;$$

Das bedeutet,daß der Prozess der Erfindung einen um ca. 30% höheren thermischen Wirkungsgrad hat.

Patentansprüche:

1. Maschinenprinzip und nach diesem Prinzip gebaute Maschine,

bestehend aus

- einem Gehäuse (G,7) um einen Innenraum (I,8),
- einem im Innenraum dieses Gehäuses bewegbar gelagerten Kraftübertrager (KÜ,1), der so bewegt werden kann, daß Punkte (PK) des Kraftübertragers in einer Ebene liegende, geschlossene Kurvenzüge (KZ) mit nichtleerem Innengebiet (IG) durchlaufen,
- und bewegbaren Dichtungsvorrichtungen (DG,5), die zum Teil oder vollständig, wenigstens zeitweise in den freien Teil des Innenraums (TI) zwischen Gehäuseinnenwand und Oberfläche des Kraftübertragers ragen,

die derartig zusammenarbeiten, daß Gehäuseinnenraum und Kraftübertrager so geformt sind und die Dichtungsvorrichtungen so bewegt werden, daß durch Bewegung des Kraftübertragers und Änderung der Stellung der Dichtungsvorrichtungen permanent oder zeitweise zwischen Gehäuseinnenwand, Oberfläche des Kraftübertragers und zwei Dichtungsvorrichtungen abgeschlossene Kammern (KA, 16) gebildet werden, deren Volumen nur dadurch geändert werden kann, daß der Kraftübertrager bewegt und die Dichtungsvorrichtungen mindestens zeitweise sich relativ zu Gehäuse und Kraftübertrager bewegen, dadurch gekennzeichnet

- daß diese Maschine Gase, Dämpfe oder verdampfte Flüssigkeiten als Arbeitsmedium nutzt,
- daß diese Maschine zur Verdichtung und Entspannung von Gasen oder Dämpfen und/oder zu deren Transport in Kammern genutzt wird oder zur Gewinnung mechanischer Arbeit indem durch Zuführung thermischer Energie der Druck in einer Kammer und damit der Druck auf den Kraftübertrager in Bewegungsrichtung vergrößert wird oder für mehrere dieser Möglichkeiten gleichzeitig,
- daß gleichzeitige Änderung der relativen Stel-

lung einer Dichtungsvorrichtung zu Gehäuse und Kraftübertrager nur durch Änderung der relativen Stellung des Kraftübertragers zum Gehäuse erreicht werden kann.

2. Eine unter Patentanspruch 1 gekennzeichnete Maschine zusätzlich dadurch gekennzeichnet,
   - daß bei einem vollständigen Durchlauf eines Punktes(P) des Kraftübertragers durch seinen Kurvenzug (KZ) jeder Dichtungsvorrichtung (DG,5) nichtleere Abschnitte (Au) des Kurvenzuges so zugeordnet werden können, daß wenn sich der Punkt(P) auf diesem Abschnitt befindet, die Dichtungsvorrichtung entweder relativ zum Gehäuse oder relativ zum Kraftübertrager unbewegt ist und daß es nichtleere Abschnitte(Ab) des Kurvenzuges gibt, daß,wenn sich der Punkt (P) auf diesen Abschnitten befindet, die Dichtungsvorrichtung sowohl zum Gehäuse als auch zum Kraftübertrager relativ bewegt ist.

3. Eine unter Patentanspruch 1 oder Patentanspruch 2 gekennzeichnete Maschine, zusätzlich gekennzeichnet dadurch,
   - daß die beweglichen Dichtungsvorrichtungen in Schlitzen (4) im Kraftübertrager (1) oder im Gehäuse (7) liegende Flügel (5) sind und dort Hinundherbewegungen dergestalt ausführen können, daß die Fläche des Teils des Flügels, der in den mit Gas oder Dampf gefüllten Teil (TI) des Innenraumes zwischen Gehäuseinnenwand und Oberfläche des Kraftübertragers ragt, in diesem Raum (TI) vergrößert oder verkleinert wird,
   - und daß an den Flügeln Führungsstifte oder Führungsrollen (6) angebracht sind, die in Führungsnuten (11) stecken und bei Drehung des Kraftübertragers diese entlangfahren und aufgrund der Form der Nuten hin- und herbewegt werden und die Führungsnuten sich in der Gehäuseinnenwand (9,12) befinden, wenn die Schlitze(4) der Flügel im Kraftübertrager sind und die Führungsnuten sich im Kraftübertrager befinden, wenn die Schlitze für die Flügel im Gehäuse sind.

4. Ein Verbrennungsmotor nach dem Otto- oder Dieselprinzip dadurch gekennzeichnet,
- daß das maximale Volumen , das die Kammer in der die Zustandsänderungen des Arbeitsmediums stattfinden, (= Arbeitskammer) beim ladeprozeß hat, kleiner ist als das maximale Volumen, das sie beim Arbeitsprozeß hat.

5. Ein nach Patentanspruch 4 gekennzeichneter Verbrennungsmotor nach dem Otto- oder Dieselprinzip, zusätzlich dadurch gekennzeichnet,
- daß eine nach Patentanspruch 1, Patentanspruch 2 oder patentanspruch 3 gekennzeichnete Maschine verwendet wird.

6. Ein nach Patentanspruch 5 gekennzeichneter Verbrennungsmotor nach dem Otto- oder Dieselprinzip, zusätzlich dadurch gekennzeichnet,
- daß eine Aufladung dergestalt geschieht, daß zwischen zwei Arbeitskammern eine oder mehrere Kammern liegen, deren Inhalt durch Verkleinerung dieser Kammern über einen oder mehrere Ladekanäl(e) im Gehäuse, Kraftübertrager oder in den Dichtungsvorrichtungen in die Arbeitskammer gepreßt wird.

7. Ein Verfahren zur Erzeugung von mechanischer Arbeit aus Wärmeenergie, bei dem ein Arbeitsmedium verdichtet oder unverdichtet in einen Heizraum transportiert wird, dort durchpermanente Zuführung von Wärmeenergie durch Erhitzen über Wärmetauscher oder durch direkte Zuführung von erhitzten Gasen oder Verbrennungsgasen seine Temperatur und seine innere Energie erhöht wird und dann dem Medium unter Abgabe von Bewegungsenergie in einer Maschine gestattet wird sich zu entspannen, dadurch gekennzeichnet,

- daß der Idealprozeß dieses Vorgangs aus einer adiabatischen Zuführung des Arbeitsmediums in den Heizraum, einer isochoren Temperaturerhöhung im Heizraum, und einer adiabatischen Abführung aus dem Heizraum besteht,

- und dadurch gekennzeichnet, daß zur Zuführung oder zur Abführung oder für beide Vorgänge Maschinen nach dem Patentanspruch 1, dem Patentanspruch 2 oder dem Patentanspruch 3 verwendet werden.

0045322

Figur 1a

Figur 1b

0045322

Figur 2

Anmeldung: 80104562.6

Figur 3

Anmeldung: 80104562.6

Fig. 4a

Fig. 4b

Fig. 4c

Fig 4d

Fig 4e

Figur 4

Figur 5

Figur 6

Anmeldung: 80104562.6

0045322

Figur 7

Figur 8

Anmeldung: 80104562.6

Figur 9.

EUROPÄISCHER RECHERCHENBERICHT

Nummer der Anmeldung

EP 80 10 4562

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 4 075 981</u> (DURST)<br><br>* Spalte 1, Zeile 63 bis Spalte 2, Zeile 61; Spalte 3, Zeilen 15-37; Spalte 7, Zeile 11 bis Spalte 15, Zeile 22; Figuren 1-8 *<br><br>-- | 1-3,5,6 |
| X | <u>DE - A - 2 522 860</u> (PUCHES)<br><br>* Seite 2, Absatz 3 bis Seite 3, Absatz 4; Seite 5, Absatz 4 bis Seite 7, Absatz 2; Figuren 1,6,7 *<br><br>-- | 1-3,5 |
| X | <u>DE - A - 2 216 891</u> (LINDNER)<br><br>* Seite 2; Figur 1 *<br><br>-- | 1,2,4,5 |
| X | <u>US - A - 4 178 902</u> (GANLEY)<br><br>* Spalte 1, Zeilen 39-64; Spalte 2, Zeile 12 bis Spalte 3, Zeile 20; Figur 1; Spalte 4, Zeilen 19-62 *<br><br>-- | 1,2,5,6 |
| | <u>US - A - 4 138 847</u> (HILL)<br><br>* Spalte 1, Zeile 13 bis Spalte 2, Zeile 4; Spalte 26, Zeile 22 bis Spalte 29, Zeile 16; Figuren 6,12 *<br><br>-- | 7 |
| | <u>FR - A - 829 615</u> (PENAVAIRE)<br><br>* das ganze Dokument *<br><br>------ | 4,7 |

### KLASSIFIKATION DER ANMELDUNG (Int Cl³)

F 02 B 41/02
      53/08
F 01 C 1/344

### RECHERCHIERTE SACHGEBIETE (Int. Cl.³)

F 01 C
F 02 B
F 04 C
F 02 G

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-03-1981 | KOOIJMAN |

EPA form 1503.1   06.78